# EUROPEAN PATENT SPECIFICATION

(11) **EP 2 113 378 B1**
(45) Date of publication and mention of the grant of the patent: **20.11.2024**
(21) Application number: 09158062.1
(22) Date of filing: 16.04.2009
(51) Int. Cl.: B32B 27/08, B32B 27/30, B32B 27/32, B29C 55/02, B29C 55/14

(54) **FILM AND METHOD AND PLANT TO MAKE SAID FILM**
Film, Verfahren und Einrichtung zu dessen Herstellung
feuille, procédé et installation et procédé de fabrication associé

(30) Priority: 17.04.2008 IT UD20080084
(43) Date of publication of application: 04.11.2009
(73) Proprietor: TAGHLEEF INDUSTRIES SPA CON SOCIO UNICO, 33058 San Giorgio Di Nogaro (UD) (IT)
(72) Inventor: Garzitto, Valerio, 33010, Tavagnacco (UD) (IT)
(74) Representative: Petraz, Gilberto Luigi

(56) References cited:
- EP-A1- 1 391 295
- EP-A1- 1 862 299
- WO-A1-2004/078474
- WO-A1-2007/134911
- WO-A2-2004/094141
- US-A1- 2004 131 868
- US-A1- 2007 082 154

## Description

### FIELD OF THE INVENTION

The present invention concerns a film made of several co-extruded layers with an axially bi-orientated polypropylene (BOPP) base inside which there is also a barrier layer with an ethylene vinyl alcohol (EVOH) base.

The present invention also concerns a method and a plant to make the film, by means of the technique of flat head co-extrusion and sequential stretching.

In particular, the film according to the present invention is usable to make packing, typically of the flexible type, in the food sector, labels both of the type wrapping around a container (wrap around), and of the type incorporated into the container (in-mould label), fastenings, laminated products and similar products, and has effective properties as a barrier against oxygen.

### BACKGROUND OF THE INVENTION

It is known to make a film, used to package food, made from at least one filling layer or core, with a polypropylene homopolymer base and two lateral layers or external layers, with a polypropylene copolymer, terpolymer and/or homopolymer base. Two further internal layers (interlayers) can be provided, always based on a mix of the above materials, according to requirements.

To make the films, the standard and most economical technique, and thus preferred in the field, is flat head co-extrusion with sequential stretching.

After the co-extruded product has been cast onto the cooling roll, a stretching in the longitudinal direction of the machine is provided (MD stretching) and a subsequent stretching in the transverse direction (TD stretching).

This determines the known axially bi-orientated structure of polypropylene (BOPP).

A film as described above has good barrier properties against humidity and oxygen, but the barrier against oxygen is not sufficient for more critical applications.

The barrier against oxygen is an important property for a film used for packing foods.

To obtain the barrier effect against oxygen a metalized film can be made by depositing a thin metal layer on the film (lacquering).

If we want to avoid lacquering by means of metallization and still obtain a film with a barrier against oxygen, the use of ethylene vinyl alcohol (EVOH) is in general known, because of its good properties as a barrier against oxygen.

However, ethylene vinyl alcohol is not normally compatible with the polypropylene as indicated above and with the processing parameters provided in the standard technique of making the films in question. It is very rigid and can only be stretched with great difficulty by means of said technique with sequential stretching.

Moreover, its crystallization temperature is near to the stretching temperature traditionally used, so that, during stretching, the crystals can break and there is a drastic reduction in the effect of the oxygen barrier.

US 2004/131868 A1 discloses a laminate film comprising a biaxially oriented polymer film substrate, a metal-containing layer; and an EVOH layer coextruded or laminated directly on the metal-containing layer.

For these reasons, so far it has not been possible to make a film with a polypropylene base inside which there is a barrier layer of ethylene vinyl alcohol, using the technique of flat head co-extrusion with sequential stretching.

There are films commonly available with a polypropylene cast base or films with a bi-orientated polypropylene base produced with bubble film technology. These techniques are not very economical, however.

Purpose of the present invention is to make a film, and to perfect a method and a plant for making said film, made of layers with a base of axially bi-orientated polypropylene, which has good properties as a barrier against oxygen, which can be made cheaply using the standard and economical technique of flat head co-extrusion with sequential stretching.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

According to one feature of the present invention, a method to make a film based on axially bi-orientated polypropylene (BOPP), suitable for making packaging for food having a barrier effect against oxygen and formed by a plurality of layers one on top of the other having a polypropylene base, wherein the layers comprise at least a core layer with a polypropylene homopolymer base, and a first and a second external layers based on polypropylene copolymer, terpolymer and/or homopolymer and additives, the film further comprising a barrier layer, positioned intermediate said core layer and one of said external layers and having an ethylene vinyl alcohol EVOH base, at least an adhesive layer to couple, at least on one side, the barrier layer with a respective adjoining layer, and a layer with a polypropylene copolymer, terpolymer and/or homopolymer base, provided between the filling layer and the first external layer, comprises the following steps:
- a first step of co-extrusion, by means of a flat head extrusion unit to make an intermediate co-extruded product, in the form of a film, formed from said layers and by said barrier layer;
- a second step of sequential stretching, respectively in the machine direction (MD) and in a direction transverse to the machine (TD), of the intermediate product, so as to determine the desired axially bi-orientated structure (BOPP) and influence the final thickness of each of the layers. The stretching step provides a first stretching operation in a first longitudinal direction, in the direction of advance of the intermediate product and, subsequently to the first stretching operation, a second stretching operation in a second direction transverse to the first direction;
- a third trimming step, in the longitudinal direction, in which the lateral material (known in technical jargon as "selvage") of the intermediate product exceeding the desired final width is cut, so as to define the final film.

According to one characteristic of the present invention, the trimming step of the edges does not affect the barrier layer, as there is a safety distance between the lateral ends of said barrier layer and the lateral ends of said intermediate product. Advantageously, the co-extrusion is made so that the value of the distance of one of the lateral ends of the barrier layer from the relative lateral end of the intermediate product itself, before the trimming of the selvages, is greater than or equal to about 50 mm.

Advantageously, the value of the distance is comprised between about 50 and 120 mm, preferably between about 55 and 100 mm, even more preferably between about 60 and 80 mm.

This distance allows to obtain a co-extruded film with ethylene vinyl alcohol incorporated which is easily stretched by means of sequential stretching, in the desired stretching ratios, to obtain overall thicknesses of the film and in particular of the barrier layer, suitable to create an oxygen barrier effect.

In fact, thanks to said value of the distance adopted in the first step, once the stretching ratio has been defined as the ratio between the transverse dimension of the intermediate product before and after the stretching operation, in order to have the desired final properties of the film, the stretching ratio of the second stretching operation is advantageously comprised between about 1:6 and about 1:12.

The stretching time of said second stretching operation can be comprised between 2 and 10 seconds.

Advantageously, the method also comprises a recirculation step able to recirculate the material of the selvages cut by the trimming unit to the extrusion unit, with obvious advantages in terms of cost of the raw material.

The distance of the barrier layer from the end of the intermediate co-extrusion product represents a safety measure by means of which the material based on ethylene vinyl alcohol is guaranteed not to be cut/trimmed and therefore re-circulated.

The material based on ethylene vinyl alcohol for the barrier layer may be obtained by means of copolymerization of ethylene and vinyl alcohol, where the ethylene is present in a percentage in weight comprised between 24% and 48%.

This innovative starting composition for the copolymerization of ethylene vinyl alcohol achieves a good compromise between the required performance of processability and as oxygen barrier.

In particular this composition allows to have a stretching temperature, in the second stretching operation, which is advantageously comprised between about 140°C and 200°C, that is, a temperature of the conventional type, but substantially without the disadvantages due to the crystallization of ethylene vinyl alcohol.

The stretching temperature which is used in said first stretching operation can be comprised between about 70°C and 150°C.

Preferably, the thickness of the barrier layer is comprised between about 0.5 and 14 micron (µm), more preferably between about 1 and 7 micron (µm), even more preferably between 3 and 5 micron (µm), so as to obtain the desired oxygen barrier effect.

The film which is obtained from the present invention is made by means of the standard and economical technique of flat head co-extrusion with sequential stretching, as described above.

The film can advantageously be transparent.

Alternatively, the film can also be metalized, obtaining better barrier performances with respect to a traditional metalized BOPP film.

Moreover, the film can have an aesthetic white appearance, thanks to the insertion of TiO₂ in the filling or core layer.

The external aesthetic appearance can also be made pearly, thanks to the insertion of CaCO₃ in the filling or core layer.

The combination which is obtained by inserting both TiO₂ and CaCOs in the filling or core layer, allows to obtain a white, expanded film.

The presence of a single barrier layer of ethylene vinyl alcohol contributes to rendering the film made according to the present invention economically convenient, at the same time also obtaining the desired oxygen barrier effect.

According to a further feature of the present invention, a film with an axially bi-orientated polypropylene (BOPP) base obtainable by the method of the invention, and suitable to make packing, flexible packages, laminated products and labels, comprises at least a partial oxygen barrier effect, the film being formed by a plurality of layers having a polypropylene base, wherein said layers comprise at least a core layer with a polypropylene homopolymer base, a first and a second external layers based on polypropylene copolymer, terpolymer and/or homopolymer, the film further comprising a barrier layer, positioned intermediate said core layer and one of said external layers and having an ethylene vinyl alcohol (EVOH) base, at least an adhesive layer to couple, at least on one side, the barrier layer with a respective adjoining layer, and a layer with a polypropylene copolymer, terpolymer and/or homopolymer base, provided between the core layer and the first external layer.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of a plant to make a film according to the present invention;
- fig. 2 is a schematic section of a film in a draw-plate of the plant as in the state of the art;
- fig. 3 is a schematic section of a film in a draw-plate of a plant used in the present invention;
- fig. 4 is a schematic section of a variant of a film in a draw-plate used in the present invention:
- fig. 5 is a front view of a part of the plant in fig. 1;
- fig. 6 is a section from VI to VI in fig. 5;
- fig. 7 is a section from VII to VII in fig. 5.

### DETAILED DESCRIPTION OF A PREFERENTIAL FORM OF EMBODIMENT

With reference to the attached drawings, a plant 30 is used to make a final film 10 formed by seven layers 12, 14, 16, 18, 20, 22 and 24 positioned one above the other.

The final film 10 is used preferentially, even if not exclusively, to make welded/hermetically closed containers by means of thermo-welding, or labels, as indicated above.

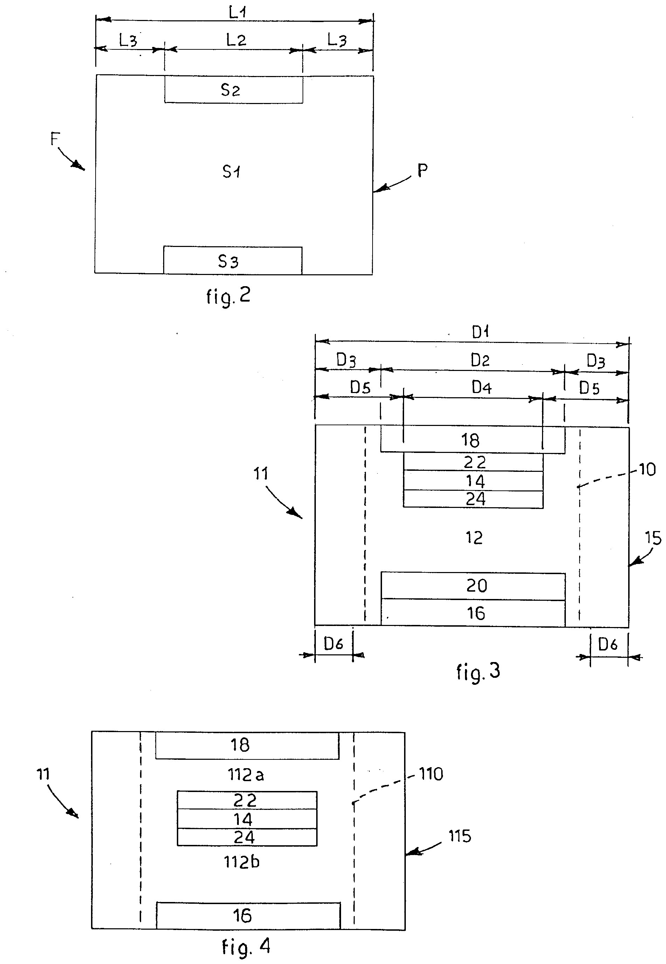

In particular there is the following sequence and disposition, so-called asymmetrical, for the layers of the final film 10, as shown in fig. 3:
- a filling or core layer, 12 with a polypropylene homopolymer base. The filling layer 12 constitutes the core of the final film 10 and substantially governs its mechanical properties and rigidity, as well as the heat stability;
- a barrier layer 14, with an ethylene vinyl alcohol base, for the barrier against oxygen of the final film 10;
- a first external layer 16 and a second external layer 18, or layers of skin, based on polypropylene copolymer, terpolymer and/or homopolymer and additives, for example sliding not migrating, even if other type of additives can be used. The external layer 16 is the one that normally faces toward the inside of the container, that is toward the (food) product contained. The external layer 16, in particular, has thermo-weldability characteristics and is suitable to close the packing hermetically. The external layer 18 is normally the layer located on the outside of the packing, which can be coupled with paper, tin foil or other appropriate material, or it can be directly printed, for example with ink or similar. It is clear that, alternatively, the layer facing toward the inside can be layer 18, and the layer facing toward the outside can be layer 16;
- layer 20, called "interlayer", with a polypropylene copolymer, terpolymer and/or homopolymer base, which in this case is adjacent to the first external layer 16, toward the inside of the final film 10;
- two adhesive layers 22 and 24, based on one or more adhesives ("tie layers") able to couple the core layer 12 and the barrier layer 14 to each other, which are disposed adjacent, on one side and the other, to the barrier layer 14. The adhesive layer 22 couples the barrier layer 14 directly to the second external layer 18, while the adhesive layer 24 couples the barrier layer 14 directly to the core layer 12. A suitable adhesive could be a polyolefin modified with maleic anhydride.

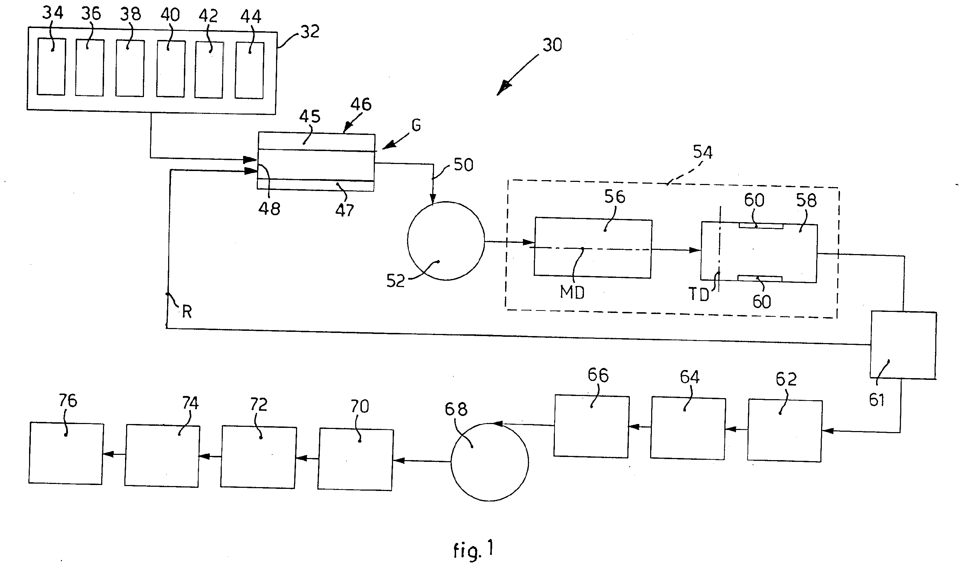

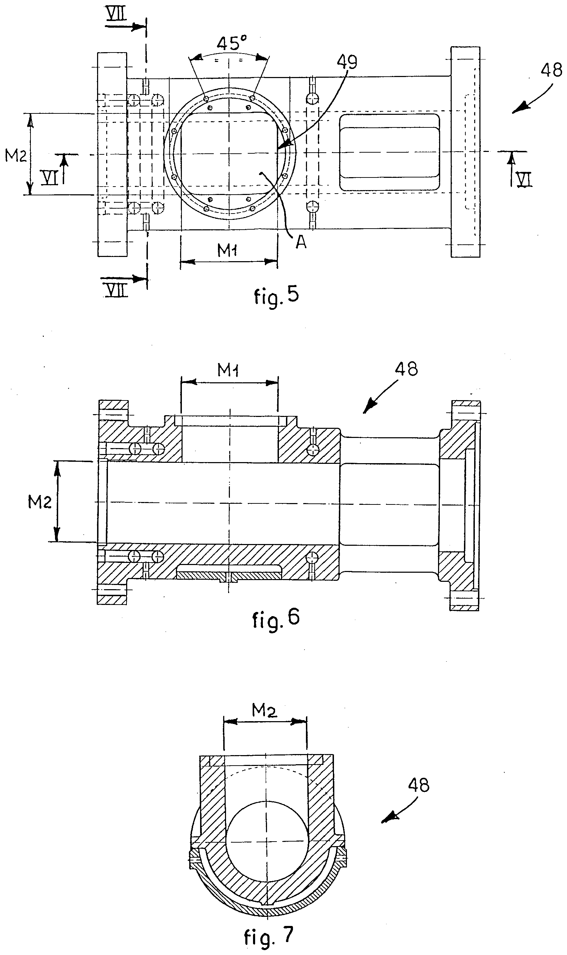

The plant 30 is of the flat head co-extrusion type with sequential stretching and comprises:
- a dosage unit 32, having at least a plurality of tanks 34, 36, 38, 40, 42 and 44 containing the various materials which make up the layers 12, 14, 16, 18, 20, 22 and 24 as described above (other tanks can be provided to contain and dose the various optional additives and/or extras);
- a flat head extrusion unit 46, connected downstream of the dosage unit 32, to produce a product or co-extruded intermediate film 15 formed by said layers 12, 14, 16, 18, 20, 22 and 24. The extrusion unit 46 is configured to make the asymmetrical disposition of the final film 10 as described above. The extrusion unit 46 is provided with a main extruder 47, for the extrusion of the core layer 12, and with secondary co-extruders, indicated as a whole, for convenience of representation, by the reference number 45, for the co-extrusion of the remaining layers 14, 16, 18, 20 22 and 24. The main extruder 47 has a feeder body 48 (figs 5, 6 and 7) with a feed mouth 49 in which the polypropylene homopolymer is fed for the extrusion of the core layer 12;
- a cooling roll 52 or chill roll, onto which the intermediate film 15 co-extruded at exit from the extrusion unit 46 is cast, as indicated by the arrow 50;
- a stretching unit 54 to carry out the sequential stretching of the co-extruded intermediate film 15 and which comprises a first stretching device 56, to stretch the co-extruded intermediate film 15 in a longitudinal direction, that is, parallel to the direction of advance, or machine direction (arrow MD) and a second stretching device 58, to stretch transversely to the machine direction (arrow TD), by means of lateral grippers 60 (shown only schematically in fig. 1), the co-extruded intermediate film 15;
- a trimming unit 61, able to cut lateral strips (selvages) of the co-extruded intermediate film 15, to eliminate the excess material at the sides, which is recycled to the feeder mouth 49 of the main extruder 46, as indicated by the arrow R (re-circulation line);
- a station to control the thickness 62;
- a flame treatment unit 64;
- a crown treatment unit 66, or plasma treatment or both. These known treatments, like the flame treatment, have the function of modifying the surface roughness and/or of oxidizing the external surface, layer 18, of the film in order to render it more receptive with respect to the elements used to confer on the externally visible part of the packing the desired aesthetic configuration;
- a winding roll 68 to wind the film;
- a quality control station 70;
- an ageing station 72;
- a slitting station 74 to cut the mother spools produced into the formats required by the market/clients;
- a packing unit 76.

In particular, the co-extrusion of the ethylene vinyl alcohol for the barrier layer 14 is achieved by feeding the raw material at a temperature comprised between 15°C and 120°C. There is then an extrusion zone (fusion, filter and adapter) between 180°C and 260°C.

It must be noted that, due to the different chemical-physical characteristics, among which the melting temperature in particular, the feed of ethylene vinyl alcohol is distinct from that of the other materials, in particular from the polypropylene homopolymer extruded by the main extruder 47.

As has been said, the extrusion unit 46 has an asymmetric configuration, directly correlated with the asymmetric geometry of the final film 10 which is to be obtained.

This configuration allows a greater versatility and flexibility in production, allowing to pass from making a film of the traditional type, of the type with 3 or 5 layers as in the state of the art, to the film according to the present invention, without modifications to the plant itself.

The co-extruded intermediate film 15 comes out of the extrusion unit 46 which, once cast onto the cooling roll 52, is subjected to sequential stretching, is trimmed, treated and refined by means of slitting so as to make the final film 10 final, which is then packed.

The width of the co-extruded intermediate film 15 exiting from the extrusion head of the extrusion unit 46, in particular the width of the extrusion head used, determines the so-called width of the productive draw-plate 11 of the plant 30, as one would see looking in the direction indicated by the arrow G in fig. 1 and as schematically shown also in section in fig. 3.

Fig. 2 illustrates, on the other hand, a schematic section of a productive draw-plate F for a film P known in the state of the art, consisting of a filling or core layer, S 1 of polypropylene homopolymer and of two external layers S2 and S3 of polypropylene copolymer, terpolymer and/or homopolymer.

In this case the width of the state-of-the-art draw-plate F can be identified as the distance indicated by L1, between the ends of the co-extruded film P exiting from the extruder, while the distance L2 indicates the width of the layers S2 and S3 and, finally, the segments L3 indicate the distance of said layers S2 and S3 from the ends of the film P.

With regard to the present invention, the width of the draw-plate 11, univocally determined by the width of the extrusion head, is represented by the distance D1 between the ends of the co-extruded intermediate film 15 exiting from the extrusion unit 46. The width of the extrusion head substantially coincides with the value of the distance D 1.

The distance D2 represents the width of each of the layers 16, 18 and 20, while the segment D3 represents the distance of each of said layers 16, 18, and 20 from the ends of the co-extruded intermediate film 15.

Finally, the distance D4 represents the width of each of the layers 14, 22 and 24, while the segment D5 represents the distance of the barrier layer 14 from the corresponding end, left or right, of the intermediate film 15, before the selvages are cut (fig. 3).

The segment D6 consists of material that is generated in excess at the sides of the co-extruded intermediate film 15 to define a gripping zone, used by the grippers 60 for the transverse stretching. The value D6 is normally constant for any thickness of the film and for any width of the draw-plate, usually equal to 25 mm for the present invention.

As we said, to obtain the final film 10 it is necessary to have the trimming operation to eliminate the selvages at the sides (usually a segment with a width of about 7 - 8 mm), which entails the production of scales of cut off lateral material which are normally re-circulated to the main extruder 46.

In the recirculation material only polypropylene homopolymer must be present, and not ethylene vinyl alcohol too, since the presence of ethylene vinyl alcohol, which is a polymer incompatible with polypropylene, would entail the presence of serious aesthetic defects.

Therefore, to ensure that the trimming operation does not also cut strips of material containing ethylene vinyl alcohol, according to the present invention the barrier layer 14 must have a distance D5 from the ends of the co-extruded intermediate film 15, before the selvages are cut, such as to prevent even the partial cutting of the barrier layer 14 itself. The distance D5 therefore constitutes a safety measure to prevent the recycling of ethylene vinyl alcohol. Taking into account the space necessary for gripping, segment D6, it is necessary to provide a segment where the cut may be made safely. Keeping this in mind, according to the present invention, the length of the segment D5 is greater than or equal to 50 mm, advantageously comprised between about 50 mm and 120 mm, preferably between 55 and 100 mm, more preferably between 60 and 80 mm.

The following Table 1 shows examples of values in millimeters for the values of L1, L2 and L3 in the state of the art, and also for values of D1, D2, D3, D4, D5 and D6 of the present invention.

| Table 1 | | | | | |
|---|---|---|---|---|---|
| D1 | D2 | D3 | D4 | D5 | D6 |
| 684 | 594 | 45 | 540 | 72 | 25 |
| L1 | L2 | L3 | | | |
| 630 | 540 | 45 | | | |

As we can see, the distance of the barrier layer 14 from the ends of the co-extruded intermediate film 15 has been increased, with respect to the same distance L3 of the innermost layer S3 in the state of the art.

Furthermore, again in comparison with the state of the art, the width of the draw-plate D1 has been increased with respect to the analogous value of L1 and the value of the length L2, which in the state of the art related to the layers S2 and S3, corresponds, in the present invention, to the value D4 of the width of the barrier layer 14, whereas the value D2 of the width of the layers 16, 18 and 20 has been increased.

Another fundamental parameter is the ratio of transverse stretching, that is, the ratio between the transverse size before and after stretching TD.

Generally speaking, the ratios of stretching in the present invention are reduced with respect to what is known in the state of the art.

As a correlation, the stretching temperature and the stretching times have consequently been optimized.

Table 2 shows the ranges of values advantageously adopted for transverse stretching TD (temperature in °C, time in seconds).

**Table 2**

| | | |
|---|---|---|
| Temperature preheating rolls | of 140 - 200 | |
| Temperature stretching rolls | of 140 - 200 | |
| Temperature stabilizer rolls | of 140 - 200 | |
| Stretching ratio | | 1:6 - 1:12 |
| Stretching time | | 2 - 10 |

For example, for a draw-plate with a width of 684 mm, the co-extruded intermediate film 15 will have a width of 684 mm, and once it has been cast on the cooling roll 52, it cools and shrinks to a width of 640 mm. Afterward, we have the longitudinal stretching and the film shrinks to about 580 mm. Then, the co-extruded intermediate film 15 is gripped at the sides and the transverse stretching is carried out, with a stretching ratio of 1:9.

The optimum values of stretching ratio, a compromise between the rigidity of ethylene vinyl alcohol and the necessary stretching, are advantageously obtained also by using a particular starting mixture in the copolymerization of ethylene and vinyl alcohol, to obtain ethylene vinyl alcohol.

Normally, the higher the ethylene content, the better the processing properties are and the lower the oxygen barrier properties.

The starting mixture is formed by a composition (percentage in moles) of ethylene comprised between about 24% and 48%, the rest being substantially vinyl alcohol. The characteristic composition according to the present invention provides the desired and optimum balance between the oxygen barrier properties and the processability and working of the copolymer.

The stretching step is extremely important, since it determines the BOPP structure of the final film; the ratios of sequential stretching applied to the co-extruded intermediate film 15 also influence the thickness of the various layers 12, 14, 16, 18, 20, 22 and 24.

In turn, the thicknesses of the various layers 12, 14, 16, 18, 20, 22 and 24 are directly correlated to the effectiveness of the respective properties that they must confer on the final film 10 (mechanical properties, oxygen barrier, adhesion, thermo-weldability, etc).

The following Table 3 shows the ranges of thicknesses obtainable with the present invention for said various layers, as the overall thickness of the film varies (thicknesses in micron µm). The thicknesses of the adhesive layers 22 and 24 are the same.

It should be noted that for each overall thickness of the final film 10, the values of thicknesses of the various layers that make it up are provided between a minimum value and a maximum value, but it is clear that the choice of individual thicknesses is determined by production needs, so as to have in any case the desired final properties of the film, with the desired final thickness.

**Table 3**

| Tot. | Layer 12 | Layer 14 | Layer 16 | Layer 18 | Layer 20 | Layer 22 |
|---|---|---|---|---|---|---|
| 15 | 6-10 | 0.8-5 | 0.6-2 | 0.6-2 | 1-6 | 0.7-6 |
| 20 | 6-15 | 0.8-6 | 0.6-2 | 0.6-2 | 1-10 | 1-10 |
| 25 | 6-20 | 1-6.5 | 0.6-2 | 0.6-2 | 1.5-11 | 1.5-11 |
| 30 | 6-25 | 1-7 | 0.6-2.5 | 0.6-2.5 | 2-13 | 2-13 |
| 35 | 6-30 | 1-8 | 0.6-3 | 0.6-3 | 2-14 | 2-14 |
| 40 | 6-35 | 1-10 | 0.6-3.5 | 0.6-3.5 | 2-15 | 2-15 |
| 50 | 6-40 | 1-12 | 0.6-4 | 0.6-4 | 2-17 | 2-17 |
| 60 | 6-50 | 1-14 | 0.6-4.5 | 0.6-4.5 | 2-18 | 2-18 |

The following Table 4 shows the oxygen barrier values, expressed in cm³/m² d at 23°C and at 0% relative humidity, method ASTM D 3985-81, as the thickness (in micron µm) of the barrier layer 14 varies. The lower the permeability to oxygen, the greater the barrier effect is.

It is clear that these values are examples, which indicate the effectiveness of the present invention as an oxygen barrier, and that these values depend not only on the thickness but also on the composition of the starting mixture for the copolymerization of the ethylene vinyl alcohol.

**Table 4**

| Thickness | Permeability O₂ |
|---|---|
| 3 | 8 |
| 5 | 6 |
| 7 | 5 |

By increasing the thickness of the barrier layer 14, the oxygen barrier properties increase, but also the overall cost of the final film.

According to the present invention, the barrier layer 14 preferably has a thickness of at least 3 micron (µm), so as to have a good compromise between optimum oxygen barrier properties and cost of the film.

To have sufficient adhesion properties, using the adhesive with the polyolefin base modified with maleic anhydride, the thickness of each of the adhesive layers 22 and 24 should preferably not go below 0.7 micron (µm), whereas optimum conditions are obtained with a thickness of around 2-3 microns (µm).

The thicknesses depend on the type of adhesive used, and it is not excluded that lower optimum thicknesses may be achieved with other adhesives.

For thermo-weldability of the final film, the thickness of each of the external layers 16 and 18 should preferably not go below 0.6 micron (µm).

A preferred final film 10 has an overall thickness of 20 micron (µm) and provides the core layer 12 of 6 micron (µm), the barrier layer 14 of 4 micron (µm), layer 16 and layer 18 of 1 micron (µm) each, layer 20 of 2 (µm), and the adhesive layers 22 and 24 of 3 micron (µm) each.

As we said, the trimming operation entails the recycling of the cut material, the percentage in weight of which with respect to the core is much higher than in the state of the art. For a film with 6 or 7 layers, therefore, we have a high percentage weight of re-circled scales, normally even higher than the percentage in weight or quantity that is dosed by the dosing unit 32.

In the state of the art, the feed mouth for standard production (lines of 4m, 6.5m and 8m) has a diameter that can vary from 200 mm to 250 mm, therefore with a section from about 31000 mm² to about 50000 mm².

For example, for a draw-plate 630 mm wide (L1) and with a width of 540 mm (L2) of the layer S2, we have a feed mouth with a circular section with a diameter of 220 mm, and therefore with a surface of about 38000 mm².

Normally, the flow rate of the extrusion line is constant, so that the plant 30 can be used in a versatile manner, both to achieve films of a known type, and also for the film according to the present invention. Therefore, when the new film is produced, the percentage weight in the core of the scales deriving from the trimming increases by as much as 50 - 60% by virtue of the reduction in thickness of the filling layer or core 12. In the state of the art, instead, in order to achieve the traditional film shown in fig. 2, the scales make up at most 20% of the material that is extruded in the main extruder. The possibility of versatility and flexibility of the plant 30, which allows to pass from traditional production to that according to the present invention, is facilitated by the asymmetric configuration of the final film 10 which is produced, as described above.

For one reason and the other, the usable surface A (fig. 5) of the standard type feed mouth has proved to be insufficient for the passage of the main feed and the large quantity of re-circled material as described above.

It has therefore been necessary to modify and oversize the feed mouth 49 of the main extruder 47, varying and increasing the section or usable surface A for the passage of polypropylene, with respect to the state of the art.

Therefore, the value of surface A will be directly correlated to the quantity of re-circled material.

To this purpose, the sizes of the feed mouth must be such as to allow a greater feed by a multiplication factor from 1.5 to 3.0 with respect to that of standard productions.

Consequently, the usable surface A is also made supersized by said multiplication factor of 1.5 to 3.0.

Preferably, the multiplication factor with respect to standard production is equal to 2.

As can be seen in figs. 5, 6 and 7, the section or usable surface A of the feed mouth 49 can be substantially rectangular, with beveled angles, with a length (M1 and M2) of the two sides of the rectangle respectively of 330 mm and 280 mm. Obviously, the extrusion screw must necessarily have a larger section, compatible with the increase in the re-circled material. In this way, thanks to this surface A of the feed mouth 49, it is possible to prevent blockages of the feed due to excess feed.

Apart from the asymmetric configuration of the final film 10, as described above, alternatively there can also be a symmetrical disposition, so as to achieve a final film 110 as in fig. 4. In this case, an intermediate film 115 is produced, and the disposition and material of the layers 16, 18 is the same, as in the intermediate film 15 and the final film 10. Instead, the barrier layer 14, made of the same material as in the final film 10, is substantially at the center of the film 110, in a symmetrical position, with the adhesive layers 22 and 24 at the sides, all of this surrounded by the material of the core layer 12 which therefore makes up two layers, 112a upper and 112b lower. In this case therefore, the adhesive layers 22 and 24 stick the barrier layer 14 of ethylene vinyl alcohol directly to the polypropylene homopolymer of the layers 112a, 112b.

It is clear that modifications and/or additions of parts and/or steps may be made to the method and flat head extrusion unit (46) to make the film as described heretofore, without departing from the field and scope of the present invention.

## Claims

1. Method to make a film with an axially bi-orientated polypropylene (BOPP) base and suitable to make packages and labels having at least a partial barrier effect against oxygen and formed by a plurality of layers having a polypropylene base (12, 112a, 112b; 16; 18; 20, 22, 24), wherein said layers comprise at least a core layer (12) with a polypropylene homopolymer base, a first (16) and a second (18) external layers based on polypropylene copolymer, terpolymer and/or homopolymer, the film further comprising a barrier layer (14), positioned intermediate said core layer (12) and one of said external layers (16, 18) and having an ethylene vinyl alcohol (EVOH) base, at least an adhesive layer (22, 24) to couple, at least on one side, the barrier layer (14) with a respective adjoining layer, and a layer (20) with a polypropylene copolymer, terpolymer and/or homopolymer base, provided between the core layer (12) and the first external layer (16), the method comprising the following steps,
- a first co-extrusion step, by means of a flat head extrusion unit (46), to make a co-extruded intermediate product (15, 115), in the form of a film, formed by said layers (12, 112a, 112b; 14, 16; 18; 20, 22, 24) and by said barrier layer (14),
- a second step of sequential stretching, respectively in the machine direction (MD) and in a direction transverse to the machine (TD), of the intermediate product (15, 115), so as to determine the desired axially bi-orientated structure (BOPP) and define the final thickness of each of the layers (12, 112a, 112b; 16; 18; 20);
- a third trimming step, along the longitudinal direction, by means of which the edges of the intermediate product (15, 115) in excess of the desired final width are cut, so as to define the final film;
**characterized in that** the trimming step of the edges does not affect the barrier layer (14), as there is a safety distance (D5) between the lateral ends of said barrier layer (14) and the lateral ends of said intermediate product (15, 115).

2. Method as in claim 1, **characterized in that**, having defined the stretching ratio as the ratio between the transverse dimension of the intermediate product (15, 115) before and after a stretching operation, the stretching ratio of the second stretching operation in a direction transverse to the machine is comprised between about 1:6 and about 1:12.

3. Method as in claim 1 and 2, **characterized in that** the stretching temperature of said second stretching operation is comprised between about 140°C and 200°C and the stretching time of said second stretching operation is comprised between about 2 and 10 seconds.

4. Method as in claim 1, **characterized in that** as the quantity of material which is re-circulated after the trimming of the edges is directly correlated to the distance (D5) of the barrier layer (14) from the end of the intermediate product (15, 115), the usable surface (A) of the feed mouth (49) of the main extruder (48) of the extrusion unit (46) is oversized by a factor that is directly correlated to the quantity of recycled material.

5. Film with an axially bi-orientated polypropylene (BOPP) base obtainable by the method according to claim 1, and suitable to make packing, flexible packages, laminated products and labels, having at least a partial oxygen barrier effect, the film being formed by a plurality of layers having a polypropylene base (12, 112a, 112b; 16; 18; 20), **characterized in that** said layers comprise at least a core layer (12) with a polypropylene homopolymer base, a first (16) and a second (18) external layers based on polypropylene copolymer, terpolymer and/or homopolymer, the film further comprising a barrier layer (14), positioned intermediate said core layer (12) and one of said external layers (16, 18) and having an ethylene vinyl alcohol (EVOH) base, at least an adhesive layer (22, 24) to couple, at least on one side, the barrier layer (14) with a respective adjoining layer, and a layer (20) with a polypropylene copolymer, terpolymer and/or homopolymer base, provided between the core layer (12) and the first external layer (16).

6. Film as in claim 5, **characterized in that** the barrier layer (14) has a width (D4) which is less than that (D2) of the external layers (16, 18).

7. Film as in claim 5 or 6, **characterized in that** the ethylene vinyl alcohol of the barrier layer (14) is obtained by means of copolymerization of ethylene and vinyl alcohol, in which the ethylene is present to a percentage in weight comprised between 24% and 48% in moles.

8. Film as in any claim from 5 to 7, **characterized in that** the thickness of the barrier layer (14) is comprised between about 0.8 and 14 micron (µm), advantageously between about 1 and 7 micron (µm), even more advantageously between about 3 and 5 micron (µm).

9. Film as in any claim from 5 to 8, **characterized in that** it comprises a further layer of metallization.

10. Film as in claim 5, **characterized in that** it comprises one or other of TiO₂, or CaCO₃, or a mix of them, incorporated in the filling layer (12).

## Patentansprüche

1. Verfahren zur Herstellung eines Films mit einer axial biorientierten Polypropylenbasis (BOPP), die zur Herstellung von Verpackungen und Etiketten mit mindestens einer teilweisen Barrierewirkung gegen Sauerstoff geeignet ist und aus mehreren Schichten mit einer Polypropylenbasis (12, 112a, 112b; 16; 18; 20, 22, 24) gebildet ist, wobei die Schichten mindestens eine Kernschicht (12) mit einer Polypropylen-Homopolymerbasis, eine erste (16) und eine zweite (18) Außenschicht basierend auf Polypropylen-Copolymer, -Terpolymer und/oder -Homopolymer aufweisen, wobei der Film ferner eine Barriereschicht (14), die zwischen der Kernschicht (12) und einer der Außenschichten (16, 18) angeordnet ist und eine Ethylenvinylalkoholbasis (EVOH) aufweist, mindestens eine Klebstoffschicht (22, 24), um die Barriereschicht (14) mindestens auf einer Seite mit einer entsprechenden angrenzenden Schicht zu verbinden, und eine Schicht (20) mit einer Polypropylen-Copolymer-, -Terpolymer- und/oder -Homopolymerbasis, die zwischen der Kernschicht (12) und der ersten Außenschicht (16) bereitgestellt ist, aufweist, wobei das Verfahren die folgenden Schritte umfasst:
- einen ersten Coextrusionsschritt mittels einer Flachkopf-Extrusionseinheit (46), um ein coextrudiertes Zwischenprodukt (15, 115) in Form eines Films herzustellen, der aus den Schichten (12, 112a, 112b; 14, 16; 18; 20, 22, 24) und der Barriereschicht (14) gebildet wird,
- einen zweiten Schritt des sequenziellen Streckens des Zwischenproduktes (15, 115) jeweils in Maschinenrichtung (MD) und in einer Richtung quer zur Maschine (TD), um die gewünschte axial biorientierte Struktur (BOPP) zu bestimmen zu bestimmen und die endgültige Dicke jeder der Schichten (12, 112a, 112b; 16; 18; 20) zu definieren;
- einen dritter Trimmschritt entlang der Längsrichtung, durch den die Kanten des Zwischenproduktes (15, 115), die über die gewünschte Endbreite hinausgehen, abgeschnitten werden, um den endgültigen Film zu definieren;
**dadurch gekennzeichnet, dass** der Trimmschritt der Kanten die Barriereschicht (14) nicht beeinträchtigt, da es einen Sicherheitsabstand (D5) zwischen den seitlichen Enden der Barriereschicht (14) und den seitlichen Enden des Zwischenprodukts (15, 115) gibt.

2. Verfahren nach Anspruch 1, **dadurch gekennzeichnet, dass** das Streckverhältnis des zweiten Streckvorgangs in einer Richtung quer zur Maschine zwischen etwa 1:6 und etwa 1:12 liegt, wobei das Streckverhältnis als das Verhältnis zwischen der Querabmessung des Zwischenproduktes (15, 115) vor und nach einem Streckvorgang definiert ist.

3. Verfahren nach Anspruch 1 und 2, **dadurch gekennzeichnet, dass** die Strecktemperatur des zweiten Streckvorgangs zwischen etwa 140°C und 200°C liegt und die Streckzeit des zweiten Streckvorgangs zwischen etwa 2 und 10 Sekunden liegt.

4. Verfahren nach Anspruch 1, **dadurch gekennzeichnet, dass** die Menge des Materials, das nach dem Beschneiden der Kanten rezirkuliert wird, direkt mit dem Abstand (D5) der Barriereschicht (14) vom Ende des Zwischenproduktes (15, 115) korreliert, wobei die nutzbare Fläche (A) der Einfüllöffnung (49) des Hauptextruders (48) der Extrusionseinheit (46) um einen Faktor überdimensioniert ist, der direkt mit der Menge des recycelten Materials korreliert.

5. Film mit einer axial biorientiertem Polypropylenbasis (BOPP), die durch das Verfahren gemäß Anspruch 1 erhalten wird und sich zur Herstellung von Verpackungen, flexiblen Verpackungen, laminierten Erzeugnissen und Etiketten eignet, die zumindest eine teilweise Sauerstoffbarrierewirkung aufweisen, wobei der Film aus mehreren Schichten mit einer Polypropylenbasis (12 , 112a, 112b, 16; 18; 20) gebildet ist, **dadurch gekennzeichnet, dass** die Schichten mindestens eine Kernschicht (12) mit einer Polypropylen-Homopolymerbasis, eine erste (16) und eine zweite (18) Außenschicht basierend auf Polypropylen-Copolymer, -Terpolymer und/oder - Homopolymer aufweisen, wobei der Film ferner eine Barriereschicht (14), die zwischen der Kernschicht (12) und einer der Außenschichten (16, 18) angeordnet ist und eine Ethylenvinylalkoholbasis (EVOH) aufweist, mindestens eine Klebstoffschicht (22, 24), um die Barriereschicht (14) mindestens auf einer Seite mit einer entsprechenden angrenzenden Schicht zu verbinden, und eine Schicht (20) mit einer Polypropylen-Copolymer-, -Terpolymer- und/oder -Homopolymerbasis, die zwischen der Kernschicht (12) und der ersten Außenschicht (16) bereitgestellt ist, aufweist.

6. Film nach Anspruch 5, **dadurch gekennzeichnet, dass** die Barriereschicht (14) eine Breite (D4) aufweist, die geringer ist als die (D2) der äußeren Schichten (16, 18).

7. Film nach Anspruch 5 oder 6, **dadurch gekennzeichnet, dass** das der Ethylenvinylalkohol der Barriereschicht (14) durch Copolymerisation von Ethylen und Vinylalkohol erhalten wird, wobei das Ethylen in einem Gewichtsprozentsatz zwischen 24 % und 48 % in Mol vorhanden ist.

8. Film nach einem der Ansprüche 5 bis 7, **dadurch gekennzeichnet, dass** die Dicke der Barriereschicht (14) zwischen etwa 0,8 und 14 Mikrometer (µm), vorteilhafterweise zwischen etwa 1 und 7 Mikrometer (µm) und noch vorteilhafter zwischen etwa 3 und 5 Mikrometer (µm) liegt.

9. Film wie in einem der Ansprüche 5 bis 8, **dadurch gekennzeichnet, dass** er eine weitere Schicht aus Metallisierung aufweist.

10. Film nach Anspruch 5, **dadurch gekennzeichnet, dass** er eines oder anderes von TiO₂ oder CaCO₃ oder eine Mischung daraus aufweist, das in die Füllschicht (12) eingebracht ist.

## Revendications

1. Procédé pour fabriquer un film à base de polypropylène bi-orienté axialement (BOPP) et approprié pour fabriquer des emballages et des étiquettes ayant au moins un effet barrière partiel contre l'oxygène, et formé par une pluralité de couches à base de polypropylène (12, 112a, 112b ; 16 ; 18 ; 20, 22, 24), lesdites couches comprenant au moins une couche centrale (12) à base d'homopolymère de polypropylène, une première (16) et une deuxième (18) couches externes à base de copolymère, de terpolymère et/ou d'homopolymère de polypropylène, le film comprenant en outre une couche barrière (14), positionnée entre ladite couche centrale (12) et l'une desdites couches externes (16, 18) et à base d'éthylène-alcool vinylique (EVOH), au moins une couche adhésive (22, 24) pour relier, au moins d'un côté, la couche barrière (14) à une couche adjacente respective, et une couche (20) à base de copolymère, de terpolymère et/ou d'homopolymère de polypropylène, disposée entre la couche centrale (12) et la première couche externe (16), le procédé comprenant les étapes suivantes,
- une première étape, de coextrusion, au moyen d'une unité d'extrusion (46) à tête plate, pour réaliser un produit intermédiaire coextrudé (15, 115), sous forme de film, formé par lesdites couches (12, 112a, 112b ; 14, 16 ; 18 ; 20, 22, 24) et par ladite couche barrière (14),
- une deuxième étape, d'étirage séquentiel, respectivement dans le sens machine (MD) et dans un sens transversal à la machine (TD), du produit intermédiaire (15, 115), de manière à déterminer la structure bi-orientée axialement (BOPP) souhaitée et à définir l'épaisseur finale de chacune des couches (12, 112a, 112b ; 16 ; 18 ; 20) ;
- une troisième étape, de rognage, dans le sens longitudinal, au moyen de laquelle les bords du produit intermédiaire (15, 115) dépassant la largeur finale souhaitée sont coupés, de manière à définir le film final ;
**caractérisé en ce que** l'étape de rognage des bords n'affecte pas la couche barrière (14), car il existe une distance de sécurité (D5) entre les extrémités latérales de ladite couche barrière (14) et les extrémités latérales dudit produit intermédiaire (15, 115).

2. Procédé selon la revendication 1, **caractérisé en ce que**, ayant défini le rapport d'étirage comme étant le rapport entre la dimension transversale du produit intermédiaire (15, 115) avant et après une opération d'étirage, le rapport d'étirage de la deuxième opération d'étirage dans une direction transversale à la machine est compris entre environ 1:6 et environ 1:12.

3. Procédé selon la revendication 1 et 2, **caractérisé en ce que** la température d'étirage de ladite deuxième opération d'étirage est comprise entre environ 140°C et 200°C et le temps d'étirage de ladite deuxième opération d'étirage est compris entre environ 2 et 10 secondes.

4. Procédé selon la revendication 1, **caractérisé en ce que**, du fait que la quantité de matière qui est remise en circulation après le rognage des bords est directement corrélée à la distance (D5) de la couche barrière (14) par rapport à l'extrémité du produit intermédiaire (15, 115), la surface utilisable (A) de la bouche d'alimentation (49) de l'extrudeuse principale (48) de l'unité d'extrusion (46) est surdimensionnée d'un facteur qui est directement corrélé à la quantité de matière recyclée.

5. Film à base de polypropylène bi-orienté axialement (BOPP) aptes à être obtenu par le procédé selon la revendication 1, et approprié pour la fabrication d'emballages, d'emballages souples, de produits laminés et d'étiquettes, ayant au moins un effet barrière partiel à l'oxygène, le film étant formé par une pluralité de couches à base de polypropylène (12, 112a, 112b ; 16 ; 18 ; 20), **caractérisé en ce que** lesdites couches comprennent au moins une couche centrale (12) à base d'homopolymère de polypropylène, une première (16) et une deuxième (18) couches externes à base de copolymère, de terpolymère et/ou d'homopolymère de polypropylène, le film comprenant en outre une couche barrière (14), positionnée entre ladite couche centrale (12) et l'une desdites couches externes (16, 18) et ayant une base d'éthylène-alcool vinylique (EVOH), au moins une couche adhésive (22, 24) pour relier, au moins d'un côté, la couche barrière (14) à une couche adjacente respective, et une couche (20) à base de copolymère, de terpolymère et/ou d'homopolymère de polypropylène, disposée entre la couche centrale (12) et la première couche externe (16).

6. Film selon la revendication 5, **caractérisé en ce que** la couche barrière (14) a une largeur (D4) qui est inférieure à celle (D2) des couches externes (16, 18).

7. Film selon la revendication 5 ou la revendication 6, **caractérisé en ce que** l'éthylène-alcool vinylique de la couche barrière (14) est obtenu par copolymérisation d'éthylène et d'alcool vinylique, l'éthylène étant présent en un pourcentage en poids compris entre 24 % et 48 % en moles.

8. Film selon l'une quelconque des revendications 5 à 7, **caractérisé en ce que** l'épaisseur de la couche barrière (14) est comprise entre environ 0,8 et 14 microns (µm), avantageusement entre environ 1 et 7 microns (µm), de façon encore plus avantageuse, entre environ 3 et 5 microns (µm).

9. Film selon l'une quelconque des revendications 5 à 8, **caractérisé en ce qu'**il comprend une couche supplémentaire de métallisation.

10. Film selon la revendication 5, **caractérisé en ce qu'**il comprend l'un ou l'autre parmi TiO₂, ou CaCO₃, ou un mélange de ceux-ci, incorporés dans la couche de remplissage (12).
